# EUROPÄISCHE PATENTSCHRIFT

(11) **EP 1 250 239 B1**
(45) Veröffentlichungstag und Bekanntmachung des Hinweises auf die Patenterteilung: **08.06.2005**
(21) Anmeldenummer: 01911345.5
(22) Anmeldetag: 09.01.2001
(51) Int. Cl.: B60J 1/12, B60J 1/14, B60J 1/16, E05F 11/52

(54) **VERFAHREN UND VORRICHTUNG ZUM VERSTELLEN EINER FENSTERSCHEIBE , INSBESONDERE EINES CABRIOLETS, MIT EINKLEMMSCHUTZ**
METHOD AND DEVICE FOR ADJUSTING A WINDOW GLASS, IN PARTICULAR ON A CABRIOLET, WITH ANTI-TRAP PROTECTION
PROCEDE ET DISPOSITIF POUR DEPLACER UNE VITRE, NOTAMMENT D'UN CABRIOLET, DE FA ON A EMPECHER UN PINCEMENT

(30) Priorität: 21.01.2000 DE 10002466
(43) Veröffentlichungstag der Anmeldung: 23.10.2002
(73) Patentinhaber: Brose Fahrzeugteile GmbH & Co. KG, Coburg, 96450 Coburg (DE)
(72) Erfinder: RICHTER, Stefan, 96247 Michelau (DE); OFEN, Markus, 96120 Bischberg (DE)
(74) Vertreter: Ninnemann, Detlef, Dipl.-Ing.
(86) Internationale Anmeldenummer: PCT/DE2001/000105
(87) Internationale Veröffentlichungsnummer: WO 2001/053124

(56) Entgegenhaltungen:
- EP-A- 0 904 966
- DE-A- 19 700 053
- US-A- 4 842 327
- US-A- 5 685 596

## Beschreibung

Die Erfindung bezieht sich auf ein Verfahren zum Verstellen einer Fensterscheibe eines Kraftfahrzeugs mit Einklemmschutz, insbesondere einer Fensterscheibe eines Cabriolets, gemäß dem Oberbegriff des Patentanspruchs 1 sowie auf eine Vorrichtung zur Durchführung des Verfahrens gemäß dem Oberbegriff des Patentanspruchs 11. Sie richtet sich auf eine Verbesserung der Detektion von Einklemmfällen in sogenannten Scherspalten, die an eine seitliche Kante der Fensterscheibe angrenzen.

Aus DE 30 34 118 C2 ist ein Verfahren zur Steuerung eines motorisch angetriebenen Fensterhebers mit Einklemmschutz bekannt, das auf der Basis von Meßwerten des Antriebsstrangs dynamische Kenngrößen der Fensterscheibe, wie z.B. Geschwindigkeit und Beschleunigung, berechnet und aufeinander folgende Daten miteinander vergleicht. Sofern im Überwachungsbereich für die Verstellgeschwindigkeit der Fensterscheibe eine Verzögerung ermittelt wird, die außerhalb eines zulässigen Bereichs liegt, wird von einem Einklemmfall ausgegangen und die Fensterscheibe reversiert.

Mit diesem als indirekten Einklemmschutz bezeichneten Erkennungsprinzip hat man zwar bei der Sensierung von eingeklemmten Körperteilen und Gegenständen, die der Verstellrichtung direkt entgegenstanden, recht gute Ergebnisse erzielt, dies trifft jedoch nicht auf die Überwachung von sogenannten Scherspalten zu, wie sie bei Cabriolets, Coupés und Fondfenstem vorkommen. In diesen seitlichen Spalten können erhebliche Scherbelastungen auftreten, bevor der beschriebene indirekte Einklemmschutz anspricht. Eine sichere Begrenzung der Einklemmkräfte ist auf diesem Wege kaum erreichbar.

Diese Probleme können durch den Einsatz eines sogenannten direkt erkennenden Einklemmschutzes, wie beispielsweise unter Verwendung einer an der Scheibenkante oder an der dieser zugeordneten karosserieseitigen Schließkante angebrachten elektrischen Schaltleiste, vermieden werden. Allerdings weist dieses System den Nachteil auf, daß mit den Schaltleisten in das Design des Fahrzeugs eingegriffen wird und zusätzliche Kosten entstehen. Ein entsprechendes System beschreibt die DE 197 20 713 C1.

Der Erfindung liegt deshalb die Aufgabe zugrunde, mit einfachen Mitteln einen Einklemmschutz zur Verfügung zu stellen, der auch für seitliche Scherspalten eine hohe Funktionssicherheit gewährleistet.

Erfindungsgemäß wird die Aufgabe durch die kennzeichnenden Merkmale der Patentansprüche 1 und 11 gelöst. Die abhängigen Ansprüche geben Vorzugsvarianten der Erfindung an.

Demnach ist vorgesehen, daß in einer ersten Phase eine Fensterscheibe beim Schließvorgang zwischen einer zumindest teilweise geöffneten und einer fast vollständig geschlossenen Scheibenposition unter Beibehaltung eines spitzwinkligen, sich in Schließrichtung erweiternden Spalts zwischen der seitlichen Scheibenkante und einer zugeordneten Schließkante einer weiteren Fensterscheibe oder eines Karosserieteils im wesentliche vertikal (in Z-Richtung) verfahren wird, und daß anschließend in der zweiten Phase der Schließbewegung eine im wesentlichen horizontale Verschiebung (in X-Richtung) und/oder eine Drehbewegung der Fensterscheibe um die Querachse (Y-Achse) erfolgt.

Dadurch wird es möglich, einen kostengünstigen passiv erkennenden Einklemmschutz einzusetzen, mit dem beim Schließen der Fensterscheibe zunächst die im wesentlichen vertikale Bewegungsphase und anschließend die im wesentlichen horizontale Bewegungsphase überwacht werden kann. Scherbelastungen an einem eventuell eingeklemmten Gegenstand können praktisch nicht mehr auftreten, da wegen des sich in Schließrichtung öffnenden keilförmigen Spalts der Gegenstand in Bewegungsrichtung verschoben und nicht eingeengt wird. Die in den sogenannten Scherspalt eingreifenden Gegenstände unterliegen auch in der letzten Phase der Schließbewegung nur den üblichen Druckbelastungen, wie sie während der im wesentlichen vertikalen Schließbewegung auftreten.

Zur Umsetzung des erfindungsgemäßen Bewegungsablaufs weist die Verstellmechanik geeignete Führungskulissen oder Führungsschienen auf, die über daran geführte Gleitelemente den Weg der Fensterscheibe steuern. Die Gleitelemente stehen mit einer Antriebseinrichtung einer Verstellmechanik in Wirkverbindung und übertragen so die Verstellkraft auf die Fensterscheibe. Anstatt von Führungskulissen oder Führungsschienen können die Phasen von vertikaler und horizontaler Verstellbewegung der Fensterscheibe auch durch ein Hebelgetriebe gesteuert werden. Der spitzwinklige Spalt zwischen der seitlichen Scheibenkante und einer zugeordneten Schließkante wird während der vertikal gerichteten Schließbewegung konstant gehalten, um sicherzustellen, daß während dieser Phase kein Einklemmen erfolgen kann. Es besteht aber auch die Möglichkeit, den spitzwinkligen Spalt während der Schließbewegung geringfügig zu erweitern.

Eine bevorzugte Anwendung der Erfindung geht von einem gleichzeitigen Auslösen eines Schließbefehls für zwei Fensterscheiben aus, die mit jeweils zwei seitlichen Kanten einen gemeinsamen Schließbereich bilden. Die Verstellbewegungen der beiden Fensterscheiben werden elektronisch gesteuert derart aufeinander abgestimmt, daß zwischen deren seitlichen Kanten innerhalb des Bereichs der zumindest teilweise geöffneten und der fast vollständig geschlossenen Scheibenpositionen stets ein sich nicht verengender spitzwinkliger Spalt verbleibt. Dabei kann die Verstellbewegung der beiden Fensterscheiben synchron verlaufen, so daß beide Fensterscheiben gleichzeitig ihre Schließlagen erreichen. In der letzten Phase der Schließbewegung führen die Fensterscheiben eine im wesentlichen horizontale Verschiebung (in X-Richtung) und/oder eine Drehbewegung um die Querachse (Y-Achse) aus.

Bevor die zweite und letzte Phase der Schließbewegung der Fensterscheibe zum Erreichen der vollständig geschlossenen Scheibenposition ausgeführt wird, sollte die Scheibenoberkante mit der zugeordneten äußeren Kontur des Karosseriedichtungsbereichs höchstens einen solchen schmalen Spalt bilden, daß eine Einführung von Körperteilen nicht möglich ist. Vorzugsweise befindet sich die Oberkante der Fensterscheibe bereits teilweise im Dichtungsbereich, so daß die Oberkante vom Dichtungsprofil abgedeckt ist.

Natürlich kann die Verstellbewegung der beiden Fensterscheiben auch asynchron verlaufen, so daß diese nacheinander ihre Schließlagen erreichen. Dabei führt eine erste Fensterscheibe in der letzten Phase ihrer Schließbewegung eine im wesentlichen horizontale Verschiebung (in X-Richtung) aus und wird mit einer höheren Verstellgeschwindigkeit betrieben als die zweite Fensterscheibe, die in der letzten Phase ihrer Schließbewegung eine Drehbewegung um die Querachse (Y-Achse) ausführt, wobei die erste Fensterscheibe ihre Schließlage vor der zweiten Fensterscheibe erreicht.

Für den Fall, daß ausschließlich die erste Fensterscheibe geöffnet wurde und die zweite Fensterscheibe geschlossen blieb, sollte nach dem Auslösen eines Schließbefehls zunächst die zweite Fensterscheibe wenigstens teilweise geöffnet werden, bis ein hinreichend großer (definierter) spitzwinkliger Spalt entstanden ist. Nach dem Öffnen der zweiten Fensterscheibe oder noch während des Öffnungsvorgangs kann die erste Fensterscheibe in die Schließlage verfahren werden. Abschließend wird die zweite Fensterscheibe geschlossen.

Um sicher zu gehen, daß die Fensterscheibe nach Abschluß der zweiten Phase der Schließbewegung tatsächlich vollständig geschlossen ist, ist ein Nachdrücken in die im wesentlichen vertikale Richtung (Z-Richtung) zu empfehlen. Zu diesem Zweck ist eine Ansteuerung des Antriebs in die besagte Richtung für einen Bruchteil einer Sekunde in der Regel ausreichend.

Die Elektronikeinheit, die der Funktion des Einklemmschutzes dient, steuert auch die Verstellmechaniken bzw. die Bewegungsabläufe von beiden Fensterscheiben entsprechend einem in einem elektronischen Speicher abgelegten Programm.

Nachfolgend wird die Erfindung anhand von Ausführungsbeispielen und den dargestellten Erfindungen näher erläutert. Es zeigen:
- Figur 1a: schematische Darstellung von zwei verstellbaren Fensterscheiben eines Coupés in teilweise geöffneter Position mit einem zwischen den seitlichen Scheibenkanten sich in Schließrichtung öffnenden konischen Spalt;
- Figur 1b: wie Figur 1a, jedoch in fast vollständig geschlossener Position;
- Figur 1c: wie Figur 1b, jedoch nach dem Schließen des konischen Spalts;
- Figur 1d: wie Figur 1c, jedoch nach einer zusätzlichen geringfügigen Verstellbewegung der beiden Fensterscheiben in vertikaler Richtung;
- Figur 2: schematische Darstellung einer Fondtür eines Kraftfahrzeugs mit einer teilweise abgesenkten Fensterscheibe, wobei zwischen dem C-säulenseitigen Holm und der zugeordneten Seitenkante der Fensterscheibe ein sich in Schließrichtung öffnender Spalt vorgesehen ist.

Das in den Figuren 1a bis 1d dargestellte und nachfolgend beschriebene Ausführungsbeispiel zeigt eine Vielzahl von Phasen der Verstellbewegung von zwei Fensterscheiben 1 und 2, die über das, was das Erfindungsprinzip ausmacht, weit hinausgeht. Tatsächlich besteht der Kem der Erfindung in der Beibehaltung eines sich in Schließrichtung öffnenden konischen Spalts 111 zwischen einer seitlichen Scheibenkante 11 und einer dieser zugeordneten Schließkante 21, 51, und zwar während der gesamten Verstellung der Fensterscheibe 1 von einer zumindest teilweise geöffneten bis zu einer fast vollständig geschlossenen Position. Dies kann im allgemeinen mit einfachen Bewegungsabläufen erreicht werden, die nicht mehr als zwei aufeinanderfolgende Bewegungsphasen aufweisen. Die zeitliche Aufeinanderfolge dieser Bewegungsphasen ist dabei nicht im strengen Sinne zu verstehen, da eine Gleichzeitigkeit solange unerheblich ist, wie dem Erfordernis des sich nicht verengenden keilförmigen Spalts 111 Rechnung getragen wird. Der keilförmige seitliche Spalt 111 wird erst geschlossen, wenn zwischen der Oberkante 10 der Fensterscheibe 1 und der Unterkante 30 des zugeordneten Dichtungsbereichs 3 der Karosserie kein Einklemmspalt mehr besteht.

Die schematische Darstellung von Figur 1a zeigt die teilweise geöffneten Fensterscheiben 1 und 2 eines Cabriolets oder Coupés, wobei karosserieseitig lediglich die sogenannte Gürtellinie 4 des Fahrzeugs und der den Scheibenoberkanten 10, 20 zugeordnete Dichtungsbereich 3 angedeutet sind. Während die in der (nicht dargestellten) Fahrzeugtür angeordnete Fensterscheibe 1 in vielen Fällen mit Seil- oder Armfensterhebem bewegt wird, erfolgt die Verstellung der in der Fahrzeugkarosserie zu versenkenden wesentlich kleineren Fensterscheibe 2 im allgemeinen mittels eines sogenannten bahngesteuerten Fensterhebers, bei dem die Fensterscheibe entlang geschwungener Führungskulissen gleichzeitig in Z- und X-Richtung verschoben und in der X-Z-Ebene geschwenkt werden kann. Diese an sich bekannten technischen Mittel sind derart ausgebildet und das Durchfahren des Verstellweges der Fensterscheiben 1, 2 wird derart gesteuert, daß während des gesamten Verstellvorgangs die Fensterscheiben 1, 2 zwischen der zumindest teilweise geöffneten und einer fast vollständig geschlossenen Scheibenposition zwischen den seitlichen Scheibenkanten 11, 21 einen spitzenwinkligen Spalts 111 einschließen.

Dieser Spalt 111 entsteht beim Absenken der Fensterscheibe 2 aufgrund einer Schwenkbewegung um eine Schwenkachse 22, die gemäß dieses Ausführungsbeispiels in einer Verlängerung der Seitenkante 21 unterhalb der Fensterscheibe 2 liegt. Natürlich kann die Schwenkachse 22 in Abhängigkeit der konstruktiven Bedingungen auch an einer anderen Stelle vorgesehen sein. Nur der Vollständigkeit halber sei darauf hingewiesen, daß außerdem oder an Stelle der Fensterscheibe 2 die andere Fensterscheibe 1 entgegen dem Uhrzeigersinn geschwenkt bzw. gekippt werden kann, um den gewünschten in Schließrichtung (Z-Richtung) sich öffnenden keilförmigen Spalt 111 zu erhalten.

Der Öffnungswinkel α des keilförmigen Spaltes 111 kann zur Absenkung des Verletzungsrisikos im Vergleich zu den bekannten Scherspalten, bei denen während des Schließvorgangs die Spaltweite in der Regel kontinuierlich abnimmt, sehr gering gehalten werden (zum Beispiel 1 Grad). Im Prinzip wäre es ausreichend, wenn über den betreffenden Verstellweg eine konstante Spaltweite garantiert werden könnte. Aufgrund von nicht vermeidbaren Toleranzen erscheint es deshalb vorteilhaft, konstruktiv zumindest einen kleinen Öffnungswinkel α vorzusehen. Je größer der Öffnungswinkel α und die Weite des Spaltes 111 sind, desto geringer ist das Verletzungsrisiko.

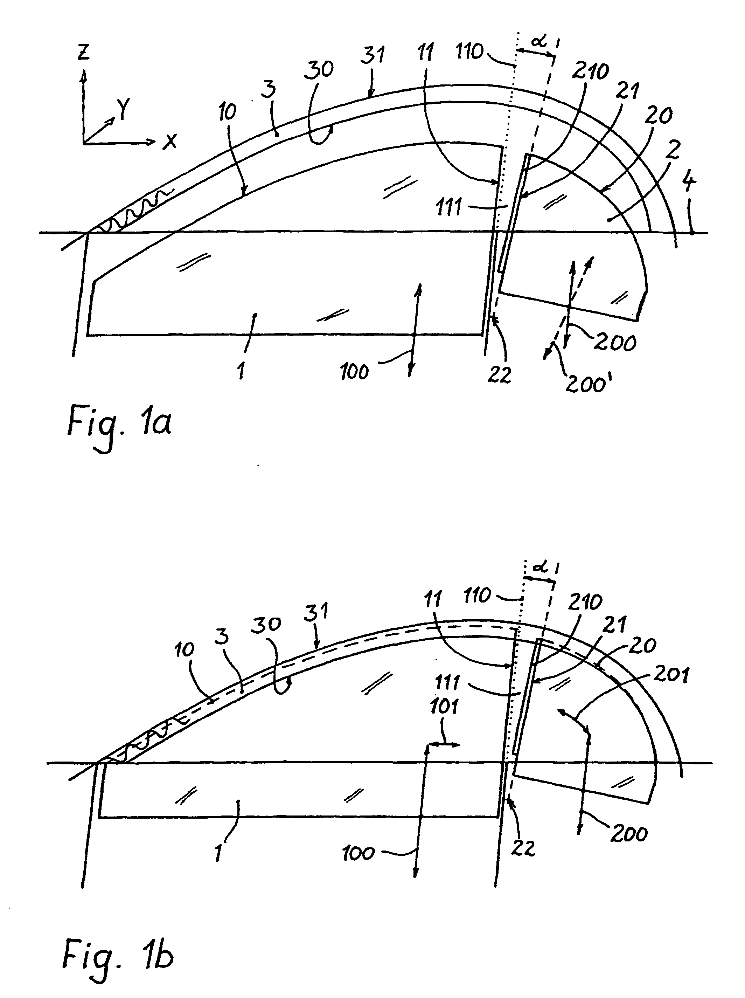

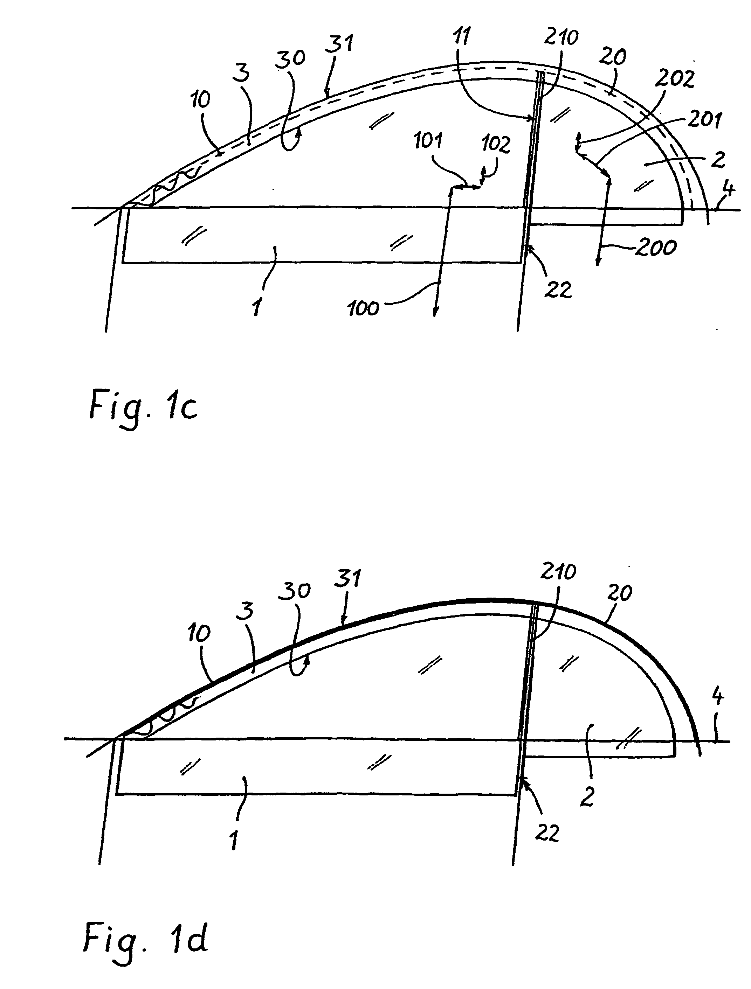

Aus der in Figur 1a dargestellten Position können die Fensterscheiben 1, 2 synchron in die im wesentlichen geschlossene Position verfahren werden, wie dies in Figur 1 b dargestellt ist, wobei die Oberkanten 10, 20 der Fensterscheiben 1, 2 schon innerhalb des Dichtungsbereichs 3 liegen, ohne jedoch den Dichtungsanschlag bereits erreicht zu haben. Die Fensterscheiben 1, 2 werden dabei entlang der Verstellrichtungen 100, 200 parallel zur Abzugslinie 110 verfahren.

Die Fensterscheibe 2 kann gegebenenfalls auch entlang einer Verstellrichtung 200' verfahren werden, wobei sich die Spaltweite vergrößern und die Sensitivität bezüglich eines Einklemmfalls zwischen der Scheibenoberkante 20 und der in diesem Bereich stark geneigten Dichtung 3 verbessern würde. Darüber hinaus kann dieser Bewegung entlang der Verstellrichtung 200 auch eine Schwenkbewegung um eine Achse 22 in Richtung des Uhrzeigersinns überlagert sein, was zu einer Vergrößerung des Öffnungswinkels α führen würde. Im Falle einer Schließbewegung entlang der Verstellrichtung 200' kann die Schwenkbewegung um die Achse 22 auch entgegengesetzt des Uhrzeigersinns erfolgen, jedoch nur in einem solchen Maße, daß die aufgrund der zur Abzugsrichtung 110 geneigten Schließrichtung 200' sich vergrößernde Spaltweite durch die gegenläufige Schwenkbewegung nicht überkompensiert wird. Eine Verengung des Spaltes 111 sowie eine Verringerung des Öffnungswinkels α sind nicht zulässig.

Nachdem der in Figur 1b gezeigte Zustand erreicht wurde, kann der Spalt 111 durch eine Schwenkbewegung um die Schwenkachse 22 in Richtung 201 geschlossen werden. Ein eventuell im Spalt 111 vorhandener Gegenstand kann durch die Einklemmschutzvorrichtung sicher und unter Gewährleistung vergleichsweise geringer Einklemmkräfte erkannt werden, da diese Bewegungsphase in Richtung 201 vergleichbare Bedingungen hinsichtlich der Schließbewegung in Richtung 200, 200' (in Richtung des Dichtungsbereichs 3) aufweist.

Gleichzeitig mit der Schwenkbewegung der Fensterscheibe 2 in Richtung 201 kann bei Bedarf auch eine horizontale Verschiebebewegung der Fensterscheibe 1 in Richtung 101 erfolgen. In diesem Falle würde eine Absenkung der Fensterscheibe 1 mit einer Verschiebung in Fahrtrichtung einhergehen, z.B. um eine schnelle Trennung des seitlichen Scheibenkante 11 vom Dichtungselement 210 zu erreichen, das an der seitlichen Scheibenkante 21 der anderen Fensterscheibe 2 angeformt ist.

Nach dem Erreichen des in Figur 1 c dargestellten Zustandes kann bei Bedarf ein Nachdrücken der Fensterscheiben 1, 2 in die im wesentlichen vertikale Verstellrichtung (Phasen 102, 202) vorgesehen werden, um mit den Scheibenoberkanten 10, 20 den Dichtungsanschlag 31 zu erreichen. Damit wird garantiert, daß ein vollkommener Schließzustand erreicht wird (siehe Figur 1d).

Neben der beschriebenen im wesentlichen simultanen Verstellung der Fensterscheiben 1 und 2 mit dem Ziel, die Schließlagen möglichst gleichzeitig zu erreichen, kann die Verstellung der Fensterscheiben 1, 2 aber auch nacheinander, mit unterschiedlichen Verstellgeschwindigkeiten oder mit nur teilweise synchron verlaufenden Bewegungen erfolgen. Welche der vielfältig möglichen Ausführungsvarianten zu wählen ist, hängt von konstruktiven Faktoren, insbesondere der Verstellkinematik, und anderen Randbedingungen (z.B. Anforderungen des Automobilherstellers) ab.

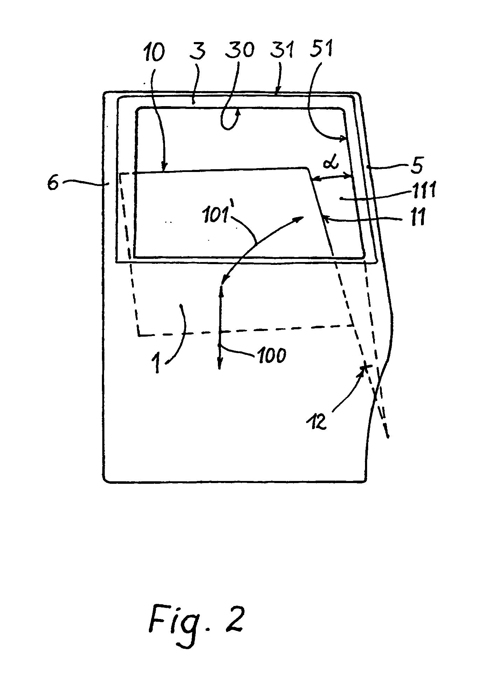

In Figur 2 ist eine Fondtür eines Kraftfahrzeugs mit einer teilweise geöffneten Fensterscheibe 1 schematisch dargestellt. Die Fensterscheibe 1 befindet sich in einem um die Schwenkachse 12 gekippten Zustand, so daß ihre seitliche (C-säulenseitige) Schließkante mit der zugeordneten Schließkante 51 des zugeordneten Holms 5 des Fensterrahmens einen sich in Schließrichtung öffnenden keilförmigen Spalt 111 einschließt. Während der Schließbewegung wird der Spalt 111 nicht eingeengt. Erst nachdem die Scheibenoberkante 10 in den Dichtungsbereich eingetaucht ist oder mit der Unterkante 30 des Dichtungsbereichs 3 nur noch einen so schmalen Spalt bildet, daß Körperteile (insbesondere Finger) darin nicht mehr eingeklemmt werden können, wird die Fensterscheibe 1 in die vertikale Position entsprechend der Schwenkkurve 101' zurück geschwenkt. Dabei werden die Scheibenkanten 10, 11 wieder parallel zu den zugeordneten Bereichen der Dichtung 3 ausgerichtet. Bei Bedarf kann anschließend ein Nachdrücken in vertikaler Richtung 100 erfolgen, um sicherzustellen, daß die Scheibenoberkante 10 den Dichtungsanschlag 31 tatsächlich erreicht hat.

### Bezugszeichenliste

- 1: Fensterscheibe
- 10: Scheibenoberkante
- 11: seitliche Scheibenkante
- 12: Schwenkachse

- 100: Verstellphase; im wesentlichen vertikale Verstellrichtung (Verschiebung in Z-Richtung)
- 101: Verstellphase; im wesentlichen horizontale Verstellrichtung (Verschiebung in Y-Richtung)
- 101': Verstellphase; im wesentlichen horizontale Schwenkrichtung
- 102: Verstellphase; im wesentlichen vertikale Verstellrichtung
- 110: Abzugsllinie der vorderen Fensterscheibe, Parallele zur seitlichen Kante der vorderen Fensterscheibe
- 111: konischer Spalt

- 2: Fensterscheibe
- 20: Scheibenoberkante
- 21: seitliche Scheibenkante
- 22: Schwenkachse

- 200: Verstellphase; im wesentlichen vertikale Verstellrichtung (Verschiebung in Z-Richtung)
- 200': Verstellphase; im wesentlichen vertikale Verstellrichtung (Verschiebung in Z-Richtung)
- 201: Verstellphase; im wesentlichen horizontale Schwenkrichtung
- 202: Verstellphase; im wesentlichen vertikale Verstellrichtung
- 210: Dichtungselement, an der seitlichen Scheibenkante angeformt

- 3: karosserieseitiger Dichtungsbereich
- 30: untere Dichtungskante
- 31: Dichtungsanschlag

- 4: Gürtellinie

- 5: C-säulenseitiger Holm
- 51: Schließkante

- 6: B-säulenseitiger Holm

- α: Winkel

## Patentansprüche

1. Verfahren zum Verstellen einer Fensterscheibe (1) eines Kraftfahrzeugs mit Einklemmschutz, insbesondere einer Fensterscheibe eines Cabriolets oder Coupés, mit einer motorisch betriebenen und elektronisch gesteuerten Verstellmechanik, wobei in einer teilweise geöffneten Position der Fensterscheibe (1) zwischen einer seitlichen Scheibenkante (11) und einer zugeordneten Scheibenkante einer weiteren Fensterscheibe (2 - Fig.1a-1d) oder eines Karosserieteils (5 - Fig.2), z.B. des Holms eines Türrahmens, ein Spalt (111) besteht, der beim Schließen der Fensterscheibe (1) durch eine Bewegung in vertikaler Richtung (Z) und horizontaler Richtung (X) verschlossen wird,
**dadurch gekennzeichnet,**
**daß** die Fensterscheibe (1) zwischen der zumindest teilweise geöffneten und der fast vollständig geschlossenen Scheibenposition unter Beibehaltung eines spitzwinkligen Spalts (111) zwischen der seitlichen Scheibenkante (11) und der zugeordneten Schließkante (21, 51) der weiteren Fensterscheibe (2 - Fig.1a-1d) oder eines Karosserieteils (5 - Fig.2) in einer ersten Phase der Schließbewegung im wesentlichen vertikal (Z) verfahren wird, und daß in einer zweiten Phase der Schließbewegung eine im wesentlichen horizontale Verschiebung (X) und/oder eine Drehbewegung der Fensterscheibe (1) um die Querachse (Y) erfolgt.

2. Verfahren nach Anspruch 1, **dadurch gekennzeichnet, daß** beim Verfahren der Fensterscheibe (1) zwischen der zumindest teilweise geöffneten und der fast vollständig geschlossenen Scheibenposition sich der spitzwinklige Spalt (111) zwischen der seitlichen Scheibenkante (11) und einer zugeordneten Schließkante (21, 51) vergrößert oder konstant gehalten wird.

3. Verfahren nach Anspruch 1, **dadurch gekennzeichnet, daß** nach gleichzeitigem Auslösen eines Schließbefehls für zwei Fensterscheiben (1, 2), die mit jeweils zwei seitlichen Kanten (11, 21) einen gemeinsamen Schließbereich bilden, die Verstellbewegungen der beiden Fensterscheiben (1, 2) elektronisch gesteuert derart aufeinander abgestimmt werden, daß zwischen deren seitlichen Kanten (11, 21) innerhalb des Bereichs der zumindest teilweise geöffneten und der fast vollständig geschlossenen Scheibenpositionen stets ein sich nicht verengender spitzwinkliger Spalt (111) verbleibt.

4. Verfahren nach Anspruch 3, **dadurch gekennzeichnet, daß** die Verstellbewegungen der beiden Fensterscheiben (1, 2) synchron verlaufen, so daß diese gleichzeitig ihre Schließlagen erreichen.

5. Verfahren nach Anspruch 4, **dadurch gekennzeichnet, daß** beide Fensterscheiben (1, 2) in der letzten Phase der Schließbewegung eine im wesentlichen horizontale Verschiebung (X) und/oder eine Drehbewegung der Fensterscheibe (1, 2) um die Querachse (Y) ausführen.

6. Verfahren nach Anspruch 3, **dadurch gekennzeichnet, daß** die Verstellbewegungen der beiden Fensterscheiben (1, 2) asynchron verlaufen, so daß diese nacheinander ihre Schließlagen erreichen.

7. Verfahren nach Anspruch 6, **dadurch gekennzeichnet, daß** eine erste Fensterscheibe (1) in der letzten Phase ihrer Schließbewegung eine im wesentlichen horizontale Verschiebung (X) ausführt und mit einer höheren Verstellgeschwindigkeit betrieben wird als die zweite Fensterscheibe (2), die in der letzten Phase ihrer Schließbewegung eine Drehbewegung um die Querachse (Y) ausführt, wobei die erste Fensterscheibe (1) ihre Schließlage vor der zweiten Fensterscheibe (2) erreicht.

8. Verfahren nach wenigstens einem der Ansprüche 3 bis 6, **dadurch gekennzeichnet, daß** nach Auslösung eines Schließbefehls für die zumindest teilweise geöffnete erste Fensterscheibe (1), die in der zweiten Phase ihrer Schließbewegung eine im wesentlichen horizontale Verschiebung (X) ausführt, zunächst die zweite Fensterscheibe (2), die in der zweiten Phase ihrer Schließbewegung eine Drehbewegung um die Querachse (Y) ausführt, wenigstens teilweise geöffnet wird, bis ein hinreichend großer definierter spitzwinkliger Spalt entstanden ist, und daß während oder nach dem Öffnen der zweiten Fensterscheibe (2) die erste Fensterscheibe (1) in die Schließlage verfahren wird, und daß abschließend die zweite Fensterscheibe (2) geschlossen wird.

9. Verfahren nach wenigstens einem der voranstehenden Ansprüche, **dadurch gekennzeichnet, daß** die Oberkante (10, 20) der Fensterscheibe (1, 2) vor der Ausführung der letzten Phase der Schließbewegung in den Dichtungsbereich (3) verfahren wird, so daß die Oberkante (10, 20) vom Dichtungsprofil abgedeckt ist.

10. Verfahren nach wenigstens einem der voranstehenden Ansprüche, **dadurch gekennzeichnet, daß** nach Abschluß der zweiten Phase der Schließbewegung der Fensterscheibe (1, 2) ein Nachdrücken in die im wesentlichen vertikale Richtung (Z) erfolgt.

11. Vorrichtung zum Verstellen einer Fensterscheibe (1) eines Kraftfahrzeugs mit Einklemmschutz, insbesondere einer Fensterscheibe eines Cabriolets oder Coupés, mit einer motorisch betriebenen und elektronisch gesteuerten Verstellmechanik, wobei in einer teilweise geöffneten Position der Fensterscheibe (1) zwischen einer seitlichen Scheibenkante (11) und einer zugeordneten Scheibenkante einer weiteren Fensterscheibe (2 - Fig.1 a-1c) oder eines Karosserieteils (5 - Fig.2), z.B. des Holms eines Türrahmens, ein Spalt (111) besteht, der beim Schließen der Fensterscheibe (1) durch eine Bewegung in vertikaler Richtung (Z) und horizontaler Richtung (X) verschließbar ist,
**dadurch gekennzeichnet,**
**daß** die Fensterhebermechanik derart ausgebildet ist, daß die seitliche Scheibenkante (11) der Fensterscheibe (1) in jeder Verstellposition zwischen der zumindest teilweise geöffneten und der fast vollständig geschlossenen Scheibenposition mit der zugeordneten Kante (21, 51) der weiteren Fensterscheibe (2 - Fig.1a-1d) oder eines Karosserieteils (5 - Fig.2) einen spitzwinkligen Spalt (111) einschließt, der in der letzten Phase der Schließbewegung durch eine im wesentlichen horizontale Verschiebung (X) und/oder eine Drehbewegung der Fensterscheibe (1) um die Querachse (Y) verschließbar ist.

12. Vorrichtung nach Anspruch 11, **dadurch gekennzeichnet, daß** die Verstellmechanik Führungskulissen oder Führungsschienen aufweist, die zur Führung von mit der Fensterscheibe (1) verbundenen Gleitelementen vorgesehen sind, die mit einer Antriebseinrichtung einer Verstellmechanik in Verbindung stehen.

13. Vorrichtung nach Anspruch 11, **dadurch gekennzeichnet, daß** die Verstellmechanik ein Hebelgetriebe aufweist, das die Phasen von vertikaler und horizontaler Verstellbewegung (X, Z) der Fensterscheibe (1) steuert.

14. Vorrichtung nach Anspruch 11, **dadurch gekennzeichnet, daß** die Scheibenoberkante (10) der Fensterscheibe (1) bei Erreichen der fast vollständig geschlossenen Scheibenposition mit der zugeordneten äußeren Kontur des Karosseriedichtungsbereichs (3) höchstens einen solchen schmalen Spalt bildet, daß ein Einklemmen von Körperteilen darin nicht möglich ist.

15. Vorrichtung nach Anspruch 14, **dadurch gekennzeichnet, daß** sich die Scheibenoberkante (10) bei Erreichen der fast vollständig geschlossenen Scheibenposition vollständig innerhalb des Karosseriedichtungsbereichs (3) befindet, ohne jedoch die Endlage der Fensterscheibe (1) vollständig erreicht zu haben.

16. Vorrichtung nach einem der voranstehenden Ansprüche, **gekennzeichnet durch** eine Elektronikeinheit, die die Verstellmechaniken von zwei Fensterscheiben (1, 2), die mit jeweils zwei seitlichen Kanten (11, 21) einen gemeinsamen Schließbereich bilden, elektronisch derart gekoppelt sind, daß die Verstellbewegungen der beiden Fensterscheiben (1, 2) entsprechend einem in einem elektronischen Speicher abgelegten Programms aufeinander abgestimmt sind.

## Claims

1. Method for adjusting a window pane (1) of a motor vehicle with anti-trap protection, more particularly for a window pane of a cabriolet or coupe, with a motor driven and electronically controlled adjusting mechanism wherein in a partially opened position of the window pane (1) between a side edge (11) of the pane and an associated edge of a further window pane (2 - Fig 1a-1d) or bodywork part (5 - Fig 2), e.g. the side piece of a door frame, there is a gap (111) which is closed as the window pane (1) is closed through a movement in vertical (Z) and horizontal (X) directions
**characterised in that**
in a first phase of the closing movement the window pane (1) is moved between the at least partly opened and the practically completely closed window pane position whilst maintaining an acute-angled gap (111) between the side edge (11) of the pane and the associated closing edge (21, 51) of a further window pane (2 - Fig 1a-1d) or body part (5 - Fig 2) substantially vertically (Z) and that in a second phase of the closing movement there is a substantially horizontal displacement (X) and/or a rotary movement of the window pane (1) about the transverse axis (Y).

2. Method according to claim 1, **characterised in that** as the window pane (1) travels between the at least partly opened and practically completely closed position of the pane the acute angled gap (111) between the side edge (11) of the pane and the associated closing edge (21,51) is increased or kept constant.

3. Method according to claim 1, **characterised in that** after a simultaneous triggering of a closing command for two window panes (1,2) which with their two side edges (11,21) form a common closing area the adjustment movements of the two window panes (1, 2) are electronically controlled and matched with each other so that between their side edges (11,21) within the area of the at least partially opened and practically completely closed pane positions there always remains a non-constricting acute-angled gap (111).

4. Method according to claim 3, **characterised in that** the adjusting movements of the two window panes (1, 2) run synchronously so that these reach their closing positions at the same time.

5. Method according to claim 4, **characterised in that** both window panes (1, 2) in the final phase of the closing movement execute a substantially horizontal displacement (X) and/or rotary movement of the window pane (1,2) about the transverse axis (Y).

6. Method according to claim 3, **characterised in that** the adjusting movements of the two window panes (1,2) run asynchronously so that these reach their closing positions one after the other.

7. Method according to claim 6, **characterised in that** a first window pane (1) in the last phase of its closing movement executes a substantially horizontal displacement (X) and is operated at a higher adjusting speed than the second window pane (2) which in the last phase of its closing movement executes a rotary movement about the transverse axis (Y) wherein the first window pane (1) reaches its closing position before the second window pane (2).

8. Method according to at least one of claims 3 to 6, **characterised in that** after the triggering of a closing command for the at least partly opened first window pane (1) which in the second phase of its closing movement executes a substantially horizontal displacement (X), first the second window pane (2), which in the second phase of its closing movement executes a rotary movement about the transverse axis (Y), is opened at least partly until a substantially large defined acute-angled gap is formed, and that during or after the opening of this second window pane (2) the first window pane (1) is moved into the closing position and that finally the second window pane (2) is closed.

9. Method according to at least one of the preceding claims, **characterised in that** the upper edge (10, 20) of the window pane (1, 2) prior to the execution of the last phase of the closing movement is moved into the sealing area (3) so that the upper edge (10, 20) is covered by the sealing profile.

10. Method according to at least one of the preceding claims, **characterised in that** after the conclusion of the second phase of the closing movement of the window pane (1,2) a second push in the substantially vertical direction (Z) takes place.

11. Device for adjusting a window pane (1) of a motor vehicle with anti-trap protection, more particularly of a window pane of a cabriolet or coupe with a motor driven and electronically controlled adjusting mechanism wherein in a partly opened position of the window pane (1) between a side edge (11) of the pane and an associated edge of a further window pane (2 - Fig 1a-1c) or a body part (5 - Fig 2) e.g. side piece of a door frame there is a gap (111) which can be closed during closing of the window pane (1) through a movement in a vertical direction (Z) and a horizontal direction (X) direction,
**characterised in that**
the window lifter mechanism is formed so that the side pane edge (11) of the window pane (1) in each adjusting position between the at least partly opened and the practically completely closed pane position includes with the associated edge (21, 51) of the further window pane (2 - Fig 1a-1d) or a bodywork part (5 - Fig 2) an acute-angled gap (111) which in the last phase of the closing movement can be closed by a substantially horizontal displacement (X) and/or rotary movement of the window pane about the transverse axis (Y).

12. Device according to claim 11, **characterised in that** the adjustment mechanism has guide slides or guide rails which are provided for guiding slide elements connected to the window pane (1) and which are connected to a drive device of an adjusting mechanism.

13. Device according to claim 11, **characterised in that** the adjusting mechanism has a lever gearing which controls the phases of vertical and horizontal adjusting movements (X, Z) of the window pane (1).

14. Device according to claim 11, **characterised in that** the upper edge (10) of the window pane (1) on reaching the practically completely closed position forms with the associated outer contour of the body sealing area (3) at most a gap which is so narrow that it is not possible for parts of the body to become trapped.

15. Device according to claim 14, **characterised in that** the upper edge (10) of the pane on reaching the practically completely closed pane position is located completely inside the bodywork sealing area (3) without having fully reached however the end position of the window pane (1).

16. Device according to one of the preceding claims **characterised by** an electronics unit which electronically couples the adjusting mechanisms of two window panes (1, 2) which with their side edges (11,21) form a common closing region so that the adjusting movements of the two window panes (1, 2) are coordinated with each other according to a program filed in an electronic memory.

## Revendications

1. Procédé pour déplacer une vitre de fenêtre (1) d'un véhicule avec protection anti-pincement, en particulier une vitre d'un cabriolet ou d'un coupé, comprenant un mécanisme de déplacement à actionnement motorisé et à commande électronique, dans lequel il existe une fente (111) dans une position partiellement ouverte de la vitre de fenêtre (1) entre une arête latérale de vitre (11) et une arête de vitre associée d'une autre vitre de fenêtre (2 - figures 1a à 1d) ou d'une pièce de carrosserie (5 - figure 2), par exemple le montant d'un cadre de porte, fente qui est fermée lorsque la vitre de fenêtre est fermée via un mouvement en direction verticale (Z) et en direction horizontale (X), **caractérisé en ce que** :
- la vitre de fenêtre (1), entre la position de vitre au moins partiellement ouverte et la position de vitre presque entièrement fermée, est déplacée essentiellement verticalement (Z) dans une première phase du mouvement de fermeture, tout en conservant une fente (111) en angle aigu entre l'arête de vitre latérale (11) et l'arête de fermeture associée (21, 51) de l'autre vitre de fenêtre (2 - figures 1a à 1d) ou d'une pièce de carrosserie (5 - figure 2) ; et
- un déplacement essentiellement horizontal (X) et/ou un mouvement de rotation de la vitre de fenêtre (1) autour de l'axe transversal (Y) a/ont lieu dans une seconde phase du mouvement de fermeture.

2. Procédé selon la revendication 1, **caractérisé en ce que** la fente (111) en angle aigu entre l'arête de vitre latérale (11) et une arête de fermeture associée (21, 51) est agrandie ou maintenue constante pendant le déplacement de la vitre de fenêtre (1), entre la position de vitre au moins partiellement ouverte et la position de vitre presque entièrement fermée.

3. Procédé selon la revendication 1, **caractérisé en ce que**, après le déclenchement simultané d'un ordre de fermeture pour deux vitres de fenêtre (1, 2) qui forment une zone de fermeture commune avec respectivement deux arêtes latérales (11, 21), les mouvements de déplacement des deux vitres de fenêtre (1, 2) sont accordés l'un à l'autre par commande électronique de sorte qu'il reste toujours une fente (111) en angle aigu qui ne se rétrécit pas, entre les arêtes latérales (11, 21) à l'intérieur de la zone de la position de vitre au moins partiellement ouverte et de la position de vitre presque entièrement fermée.

4. Procédé selon la revendication 3, **caractérisé en ce que** les mouvements de déplacement des deux vitres de fenêtre (1, 2) se déroulent de manière synchrone de sorte que celles-ci atteignent simultanément leurs situations de fermeture.

5. Procédé selon la revendication 4, **caractérisé en ce que** les deux vitres de fenêtre (1, 2) exécutent dans la dernière phase du mouvement de fermeture un déplacement essentiellement horizontal (X) et/ou un mouvement de rotation des vitres de fenêtre (1, 2) autour de l'axe transversal (Y).

6. Procédé selon la revendication 3, **caractérisé en ce que** les mouvements de déplacement des deux vitres de fenêtre (1, 2) se déroulent de manière asynchrone de sorte que celles-ci atteignent leurs situations de fermeture l'une après l'autre.

7. Procédé selon la revendication 6, **caractérisé en ce qu'**une première vitre de fenêtre (1) exécute, dans la dernière phase de son mouvement de fermeture, un déplacement essentiellement horizontal (X) et est actionnée à une vitesse de déplacement plus haute que la seconde vitre de fenêtre (2) qui exécute, dans la dernière phase de son mouvement de fermeture, un mouvement de rotation autour de l'axe transversal (Y), la première vitre de fenêtre (1) atteignant sa situation de fermeture avant la seconde vitre de fenêtre (2).

8. Procédé selon au moins l'une des revendications 3 à 6, **caractérisé en ce que** :
- après le déclenchement d'un ordre de fermeture pour la première vitre de fenêtre (1) au moins partiellement ouverte qui exécute dans la seconde phase de son mouvement de fermeture un déplacement essentiellement horizontal (X), la seconde vitre de fenêtre (2) qui exécute dans la seconde phase de son mouvement de fermeture un mouvement de rotation autour de l'axe transversal (Y), est tout d'abord au moins partiellement ouverte jusqu'à ce qu'une fente en angle aigu définie suffisamment grande soit apparue ;
- pendant ou après l'ouverture de la seconde vitre de fenêtre (2), la première vitre de fenêtre (1) est déplacée jusque dans la situation de fermeture ; et
- pour finir, la seconde vitre de fenêtre (2) est fermée.

9. Procédé selon au moins l'une des revendications précédentes, **caractérisé en ce que** l'arête supérieure (10, 20) de la vitre de fenêtre (1, 2) est déplacée dans la zone d'étanchement (3) avant l'exécution de la dernière phase du mouvement de fermeture, de sorte que l'arête supérieure (10, 20) est recouverte par le profilé d'étanchement.

10. Procédé selon au moins l'une des revendications précédentes, **caractérisé en ce que**, après achèvement de la seconde phase du mouvement de fermeture de la vitre de fenêtre (1, 2), une réapplication de pression a lieu dans la direction essentiellement verticale (Z).

11. Dispositif pour déplacer une vitre de fenêtre (1) d'un véhicule avec protection anti-pincement, en particulier une vitre d'un cabriolet ou d'un coupé, comprenant un mécanisme de déplacement à actionnement motorisé et à commande électronique, dans lequel il existe une fente (111) dans une position partiellement ouverte de la vitre de fenêtre (1) entre une arête latérale de vitre (11) et une arête de vitre associée d'une autre vitre de fenêtre (2 - figures 1a à 1c) ou d'une pièce de carrosserie (5 - figure 2), par exemple du montant d'un cadre de porte, fente qui peut être fermée lorsque la vitre de fenêtre est fermée via un mouvement en direction verticale (Z) et en direction horizontale (X), **caractérisé en ce que** le mécanisme de lève-vitre est réalisé de sorte que l'arête latérale de vitre (11) de la vitre de fenêtre (1) inclut une fente (111) en angle aigu, dans chaque position de déplacement entre la position de vitre au moins partiellement ouverte et la position de vitre presque entièrement fermée, avec l'arête associée (21, 51) de l'autre vitre de fenêtre (2 - figures 1a à 1d) ou d'une pièce de carrosserie (5 - figure 2), fente qui peut être fermée dans la dernière phase du mouvement de fermeture via un déplacement essentiellement horizontal (X) et/ou un mouvement de rotation de la vitre de fenêtre (1) autour de l'axe transversal (Y).

12. Dispositif selon la revendication 11, **caractérisé en ce que** le mécanisme de déplacement présente des coulisses de guidage ou des glissières de guidage qui sont prévues pour guider des éléments coulissants reliés à la vitre de fenêtre (1) pour le guidage et qui sont en liaison avec un dispositif d'entraînement d'un mécanisme de déplacement.

13. Dispositif selon la revendication 11, **caractérisé en ce que** le mécanisme de déplacement présente une transmission à levier qui commande les phases du mouvement de déplacement vertical et horizontal (X, Z) de la vitre de fenêtre (1).

14. Dispositif selon la revendication 11, **caractérisé en ce que**, lorsque la position de vitre presque entièrement fermée est atteinte, l'arête supérieure de vitre (10) de la vitre de fenêtre (1) forme avec le contour extérieur associé de la zone d'étanchement de carrosserie (3) au plus une fente si étroite qu'un pincement de parties corporelles dans cette fente n'est pas possible.

15. Dispositif selon la revendication 14, **caractérisé en ce que**, lorsque la position de vitre presque entièrement fermée est atteinte, l'arête supérieure de vitre (10) se trouve entièrement à l'intérieur de la zone d'étanchement de carrosserie (3) sans toutefois avoir atteint entièrement la position de fin de course de la vitre de fenêtre (1).

16. Dispositif selon l'une des revendications précédentes, **caractérisé par** une unité électronique qui couple de manière électronique les mécanismes de déplacement des deux vitres de fenêtre (1, 2) formant une zone de fermeture commune avec respectivement deux arêtes latérales (11, 21), de sorte que les mouvements de déplacement des deux vitres de fenêtre (1, 2) sont accordés l'un à l'autre en correspondance à un programme mémorisé dans une mémoire électronique.
